# EUROPÄISCHE PATENTSCHRIFT

(11) **EP 0 461 073 B1**
(45) Veröffentlichungstag und Bekanntmachung des Hinweises auf die Patenterteilung: **29.09.1993**
(21) Anmeldenummer: 91810407.6
(22) Anmeldetag: 30.05.1991
(51) Int. Cl.: C02F 11/08

(54) **Vorrichtung zur Nassoxidation**
Device for wet oxidation
Dispositif d'oxydation par voie humide

(30) Priorität: 08.06.1990 CH 1932/90
(43) Veröffentlichungstag der Anmeldung: 11.12.1991
(73) Patentinhaber: CIBA-GEIGY AG, 4002 Basel (CH)
(72) Erfinder: Voigt, Joachim, Dr., W-7859 Efringen-Kirchen (DE); Büttiker, Rudolf, Dr., CH-4125 Riehen (CH); Strub, Rolf, CH-1805 Jongny (CH)

(56) Entgegenhaltungen:
- WO-A-82/04197
- DE-U- 8 909 229
- US-A- 4 530 702
- US-A- 4 686 008
- US-A- 4 925 571
- CHEM.-ING.-TECH., Band 52, Nr. 12, 1980, Seiten 943-951; H. PERKOW et al.: "Nassoxidation - Ein Beitrag zum Stand der Technik"

## Beschreibung

Die Erfindung betrifft eine Vorrichtung zur Nassoxidation von insbesondere organisch verunreinigten Flüssigkeiten und/oder Schlämmen mit durch Leitungen untereinander verbundenen Aggregaten, nämlich mit mindestens einer Hochdruckpumpe für das zu reinigende Medium, mit wenigstens einem Wärmetauscher, in welchem ungereinigtes und erwärmtes gereinigtes Medium gegeneinandergeführt werden, mit wenigstens einem weiteren Wärmetauscher, in dem das gereinigte Medium auf unter 100°C gekühlt wird, mit einem Reaktor für die eigentliche Nassoxidation und mit einem Kompressor zur Zufuhr eines Sauerstoff-Gas-Gemisches, vorzugsweise von Luft, zu dem Reaktor.

Derartige Vorrichtungen zur Nassoxidation sind bekannt und in verschiedenen Ausführungsbeispielen in Chemie-Ingenieur-Tecknick 52 (1980) Nr. 12, S. 943 bis 951 in dem Aufsatz "Nassoxidation - ein Beitrag zum Stand der Technik" beschrieben.

Die bekannten derartigen Vorrichtungen zur Nassoxidation werden demgemäss am Ort ihrer Verwendung aus den einzelnen Aggregaten und den zugehörigen Rohrleitungen, Ventilen, Steuervorrichtungen und dergleichen montiert. Dies bedeutet einen hohen Montageaufwand, der nur dann lohnend ist, wenn entsprechend grosse Mengen an zu reinigenden Medien wie Abwasser und Schlämmen und dergleichen mit unterschiedlichsten Verunreinigungen beispielsweise in grossen chemischen Werken anfallen.

In den Veröffentlichungen "REACTOR, Zimpro Inc., No. 58, Oktober 1986, Seiten 8 - 10 und No. 65, Mai 1989, Seiten 6-7 ist beschrieben, alle wesentlichen Anlagenkomponenten, mit Ausnahme des Reaktors, auf zwei Traggestellen vorzumontieren. Die verschiedenen Anlagenkomponenten der vormontierte Nassoxidationsanlage umfassen u.a. eine Hochdruckpumpe für das zu reinigende Medium, wenigstens einen Wärmetauscher, in welchem ungereinigtes und erwärmtes gereinigtes Medium gegeneinander geführt werden, und wenigstens einen weiteren Wärmetauscher, in dem das gereinigte Medium auf unter 100°C gekühlt wird. Die beiden Traggestelle mit den vormontierten Aggregaten sind beispielsweise mit Tiefladern an den Einsatzort transportierbar. Der Reaktor, in dem die eigentliche Nassoxidation sattfindet, wird separat angefertigt und transportiert. Das Aufstellen und die Installation der Anlage am Einsatzort erfordert einen Zeitaufwand von etwa zwei bis drei Wochen. Üblicherweise wird um und über die Anlage ein Gebäude in Stahlkonstruktion errichtet. Zwar sind grosse Teile der beschriebenen Nassoxidationsanlage auf Traggestellen vorgefertigt, jedoch ist der Aufwand für die Errichtung und für die Installation der Anlage und insbesondere für das Aufstellen des separat angefertigten Reaktors derart hoch, dass sie nur dort rentabel einsetzbar ist, wo über einen längeren Zeitraum eine grosse Menge zu reinigender Flüssigkeit anfällt.

Es gibt jedoch zahlreiche kleinere Betriebe, bei denen verunreinigte Flüssigkeiten und/oder Schlämme in entsprechend geringen Mengen anfallen, wobei unter Umständen auch immer nur ein und dieselbe Art der Verunreingung auftritt und dies gegebenenfalls sogar nur zeit- oder stossweise geschieht, so dass sich der Aufwand für eine derartige Anlage zur Nassoxidation nicht lohnt. Dies führt häufig dazu, dass die verunreinigten Medien gar nicht entsorgt werden.

Es besteht deshalb die Aufgabe, eine Vorrichtung der eingangs erwähnten Art zu schaffen, die auch dann rentabel einsetzbar ist, wenn nur relativ wenig zu reinigende Flüssigkeit anfällt oder diese Flüssigkeit nur ab und zu anfällt oder womit gegebenenfalls an unterschiedlichen Orten anfallende derartige Abwässer, Schlämme oder dergleichen verunreinigte Medien durch Nassoxidation gereinigt werden können, ohne dass diese zu reinigenden Medien zu der Vorrichtung hin transportiert werden müssen.

Die überraschende Lösung dieser scheinbar widersprüchlichen Aufgabe besteht im wesentlichen darin, dass bei der eingangs erwähnten Vorrichtung der Reaktor in einzelne, nebeneinander angeordnete, hydraulisch in Reihe geschaltete Stücke aufgeteilt ist und mit weiteren Aggregaten in wenigstens einem Traggestell vormontiert ist, wobei die Abmessungen des Traggestelles und das Gesamtgewicht der - vormontierten oder vorgefertigten - Vorrichtung so gewählt sind, dass sie auf einem Stassen- und/oder Schienenfahrzeug transportierbar ist.

Auf diese Weise ist es also möglich, eine Vorrichtung vorzufertigen, also fabrikmässig herzustellen, so dass eine aufwendige Montage am Einsatzort entfällt. Durch die Aufteilung des Reaktors in einzelne Stücke und deren Anordnung nebeneinander sowie die Befestigung innerhalb eines transportierbaren Traggestelles ergibt sich eine kompakte, in den Abmessungen begrenzte Vorrichtung, die von dem Herstellungswerk nicht nur für ihren Ersteinsatz zu dem Einsatzort transportierbar ist, sondern unter Umständen auch zu verschiedenen Einsatzorten gebracht werden kann, wo jeweils zeitweise oder stossweise zu reinigende Medien anfallen. In vorteilhafter Weise wird dabei die für eine ausreichende Nassoxidation erforderliche Gesamtlänge des Reaktors trotz der durch die Transportierbarkeit begrenzten Abmessung erreicht, weil der Reaktor in einzelne Stücke aufgeteilt ist.

Besonders zweckmässig ist es dabei, wenn das Traggestell Aussenwandungen hat und ein Gehäuse für die darin enthaltenen Aggregate bildet. Dadurch werden diese während des Tansportes und bei ihrem späteren Einsatz gegen Witterungseinflüsse geschützt und abgeschirmt. Ausserdem können die von Pumpe und Kompressor erzeugten Geräusche gedämpft werden.

Eine für eine preiswerte Herstellung besonders günstige Ausgestaltung der Erfindung kann dabei darin bestehen, dass das aus Traggestell und Aussenwandungen gebildete Gehäuse ein Normcontainer ist. Es genügt dann, einen solchen Normcontainer in geeigneten Abmessungen zu erwerben und die Aggregate darin einzubauen, wonach bereits die gesamte Vorrichtung vormontiert ist. Da Normcontainer die erforderlichen Abmessungen für den Transport haben, ist die Vorrichtung dann auch ohne weiteres zu ihrem Einsazort transportierbar.

Für eine Vorrichtung mit einer gewissen Mindestleistungsfähigkeit kann es zweckmässig sein, wenn wenigstens zwei Traggestelle, insbesondere Container, zur Aufnahme der einzelnen Aggretate vorgesehen und in Gebrauchsstellung die Verbindungsleitungen der Aggregate des einen Containers mit denen des anderen Containers kuppelbar sind. Zwar sind bei einer solchen Ausführungsform zwei Container zu bestücken, zu transportieren und am Einsatzort miteinander zu verbinden, jedoch lassen sich so die einzelnen Aggregate besser unterbringen und unter Umständen auch etwas grösser gestalten bzw. umgekehrt brauchen die beiden Container jeweils nicht die bei Containern eventuell erhältlichen Höchstmase zu haben.

Dabei ist es vorteilhaft, wenn der eine Container die Pumpe und den Kompressor sowie gegebenenfalls einen Steuer- und Bedienungsschrank und der andere den in einzelne Stücke aufgeteilten Reaktor und vorzugsweise die Wärmetauscher enthalten. Die Reaktor-Stücke und die Wärmetauscher können nämlich etwa in Längsrichtung der grössten Abmessung eines solchen Containers in diesem untergebracht werden, so dass dieser dann auf einer seiner kleinen Seitenflächen aufstellbar ist, während ein anderer Container auf einer seiner langen Seiten stehen kann und Pumpe und Kompressor sowie eventuell den Steuerschrank enthält, so dass die gesamte Vorrichtung in gebrauchsfertigem Zustand etwa L-Form hat. Dies ergibt eine bestmögliche Platzausnutzung einerseits für die Vorrichtung selbst und anderereits auch im Inneren dieser Vorrichtung. Auf diese Weise lässt sich ein ausreichend grosser Durchsatz von zu reinigendem Medium erreichen.

Die Druckleitung des Kompressors kann in die Druckleitung der Hochdruckpumpe münden. Dadurch wird erreicht, dass nur eine Gesamt-Rohrleitung zu dem Reaktor führen muss, also zwischen zwei Containern nur eine entsprechende Rohrkupplung vorgesehen und beim Aufstellen montiert werden muss.

Zur Erlangung einer ausreichenden Reaktorlänge innerhalb der begrenzten Abmessungen eines tansportablen Gestelles oder Gehäuses ist es zweckmässig, wenn der Reaktor in wenigstens drei oder vier vorzugsweise rohrförmige Stücke aufgeteilt ist, die hydraulisch hintereinandergeschaltet und etwa parallel zueinander angeordnet sind. Je nach gewünschtem Reinigungsgrad könnten auch noch mehr deartige Rohrstücke vorgesehen sein.

Aus Fertigungs- und Montagegründen kann es dabei vorteilhaft sein, wenn die den Reaktor bildenden Stücke oder Rohr-Stücke jeweils einen übereinstimmenden Durchmesser und/oder Querschnitt haben.

Es ist jedoch auch möglich, dass das in Strömungsrichtung erste rohrförmige Stück des Reaktors zur Verbesserung der Durchmischung des schon heissen Mediums mit dem zuströmenden Medium einen grösseren Querschnitt als seine nachfolgenden Rohrstücke hat. Innerhalb dieses ersten Rohstückes kann sich dann nämlich eine etwa torusförmige Strömung bilden, die die gewünschte Mischung bewirkt.

Der Wärmetauscher ist zweckmässigerweise durch geometrisch nebeneinander angeordnete, hydraulisch hintereinandergeschaltete Einrohr-Wärmetauscher gebildet, wobei das zuströmende Medium vorzugsweise durch das Innenrohr und das gereinigte, heisse abströmende Medium durch den dieses umgebenden Mantel strömt. Der Wärmetauscher wird also praktisch ebenfalls in Einzel-Wärmetauscher aufgeteilt, die gut örtlich nebeneinander auf der engen Grundfläche eines vertikal stehenden Containers neben den Reaktor-Rohrstücken in genügender Anzahl untergebracht werden können.

Wie bereits erwähnt, muss dabei die Druckleitung des Sauerstoff-Gas-Gemisches vor dem Eintritt in den Wärmetauscher in die Druckleitung für das zu reinigende Medium münden, so dass beide Medien gemischt durch den Wärmetauscher strömen.

Die einzelnen Einrohr-Wärmetauscher können jeweils eine Gesamtlänge haben, die etwa der der einzelnen Rohrstücke des Reaktors entspricht oder nur wenig darüber oder darunter liegt. Somit können die einzelnen Rohrstücke des Reaktors und die Einrohr-Wärmetauscher in Gebrauchsstellung auf einer relativ kleinen Grundfläche parallel zueinander aufrechtstehend angeordnet werden, so dass auf engem Raum eine hohe Leistunsfähigkeit erreicht werden kann. Bei Gegenstrom-Wärmetauschern ergibt sich eine entsprechend hohe Wärmetauscherleistung.

Dem Wärmetauscher für das Medium kann ein zweiter Wärmetauscher nachgeschaltet sein, der zur Erwärmung zum Beispiel von Brauchwasser oder dergleichen dient. Es ist davon auszugehen, dass der zum Vorwärmen des zu reinigenden Mediums dienende Wärmetauscher in dem gereinigten Medium noch eine ausreichende Wärmemenge zurücklässt, die ausreichen kann, Brauchwasser zu erwärmen, so dass die Vorrichtung trotz ihrer vorrangigen Ausrichtung auf eine Vormontierbarkeit auch in der Energieausnutzung rentabel gestaltet werden kann.

Der Wärmetauscher zum Vorwärmen des zu reinigenden Mediums kann eine ventilgesteuerte, an ihm vorbeiführende Bypass-Leitung aufweisen und im oder am Reaktor kann wenigstens ein Wärmefühler zur Steuerung oder Regelung des Bypassventiles vorgesehen sein. Die bei der Nassoxidation anfallende Wärme wird also zunächst in dem bzw. den Wärmetauschern nutzbar gemacht, um das zuströmende verunreinigte Medium möglichst auf Reaktionstemperatur zu bringen. Wenn jedoch in dem Reaktor mehr Oxidationswärme entsteht als zur Vorwärmung des verunreinigten Mediums benötigt wird, ergibt sich das Problem, diese Wärme abzuführen, ohne dass dadurch der apparative Aufwand und somit auch der Platzbedarf vergrössert wird. Dies kann mit der vorerwähnten Massnahme auf einfache Weise erreicht werden, denn wenn am Ausgang insbesondere des letzten Rohrstückes des Reaktors die Temperatur gemessen wird, kann bei deren Ueberschreiten einer Höchsttemperatur der Wärmetauscher über das Ventil und die Bypassleitung teilweise umgangen werden. Bei zu grosser Temperatur kann über einen gewissen Zeitraum ein Teil des gereinigten Mediums durch diese an dem Wärmetauscher vorbeiführende Leitung abfliessen. Das an dieser Abzweigung befindliche Ventil kann dabei von dem Temperaturfühler derart angesteuert oder so geregelt werden, dass in dem Wärmetauscher selbst eine bestimmte Solltemperatur zum Vorwärmen des Mediums nicht überschritten wird.

In vorteilhafter Weise kann diese Bypassregelung zu einer entsprechend stärkeren Erwärmung von Brauchwasser im zweiten Wärmetauscher dienen.

Um beim Anfahren der Vorrichtung - auch nach längerem Stillstand - problemlos auf die erforderliche Reaktionstemperatur für die Nassoxidation zu kommen, ist es vorteilhaft, wenn wenigstens das in Strömungsrichtung erste Reaktor-Rohrstück, gegebenenfalls mehrere oder alle Reaktor-Rohrstücke, eine Heizung, vorzugsweise eine elektrische Heizung aufweisen. Für eine solche vormontierte, unter Umständen sogar mobile Vorrichtung lässt sich in der Regel keine Vorheizung mit Dampf oder dergleichen durchführen, da an vielen Einsatzorten heisser Dampf nicht zur Verfügung steht. Elektrischer Strom ist jedoch praktisch überall verfügbar, so dass mit einer solchen elektischen Heizung die tansportable Vorrichtung problemlos gestartet werden kann. Für das/die Reaktor-Rohrstücke kann dabei eine unmittelbar an deren Aussenfläche angeordnete Widerstandsheizung vorgesehen sein.

Damit eine solche Aufheizung, aber auch eine Betriebsunterbrechung mit möglichst wenig Wärmevelust erfolgen kann, ist es zweckmässig, wenn die Reaktor-Rohrstücke und/oder die Wärmetauscher aussenseitig isoliert sind.

Vor allem bei Kombination einzelner oder mehrerer der vorbeschriebenen Merkmale und Massnahmen ergibt sich eine kompakte, vormontierbare und transportierbare Vorrichtung zur Nassoxidation, die an unterschiedlichsten Einsatzorten schnell und problemlos aufgestellt werden kann, so dass damit ein erheblicher Beitrag zur Entsorgung von organisch verunreinigten Flüssigkeiten oder Schlämmen geleistet werden kann. Reaktionstechnisch gesehen kann dabei der in Rohrstücke aufgeteilte Reaktor als eine Kaskade von Rührkesseln betrachtet werden. Trotz der Unterbringung auf engstem Raum - bevorzugt innerhalb der genormten Abmessungen eines Containers - kann so die erforderliche Reaktionstemperatur mit genügend langen Verweilzeiten und entsprechend hohen Reinigungsgraden erreicht werden. Gegebenenfalls ist es sogar denkbar, die Zahl der Reaktor-Rohrstücke nachträglich zu vergrössen, sofern in dem Gehäuse noch genügend Platz zur Verfügung steht. Ferner sind Variationen dadurch möglich, dass das erste Einleitrohr beispielsweise in das erste Reaktor-Rohrstück von oben eingeführt werden könnte.

Nachstehend ist die Erfindung mit ihren ihr als wesentlich zugehörenden Einzelheiten anhand der Zeichnung in einem Ausführungsbeisiel noch näher beschrieben. Es zeigt in schematisierter Darstellung:
- Fig. 1: eine Seitenansicht der vormontierten Vorrichtung nach der Montage, wobei die im Inneren von zwei zusammengefügten Containern vorhandenen Aggregate angedeutet sind,
- Fig. 2: eine Draufsicht der Vorrichtung nach Fig. 1 mit den im Inneren angeordneten Aggregaten sowie
- Fig. 3: einen hydraulischen Schaltplan der Vorrichtung nach Fig. 1 und 2.

Eine im ganzen mit 1 bezeichnete Vorrichtung dient zur Nassoxidation von organisch verunreinigten Flüssikeiten und/oder Schlämmen, im folgenden auch kurz "zu reinigendes Medium" genannt.

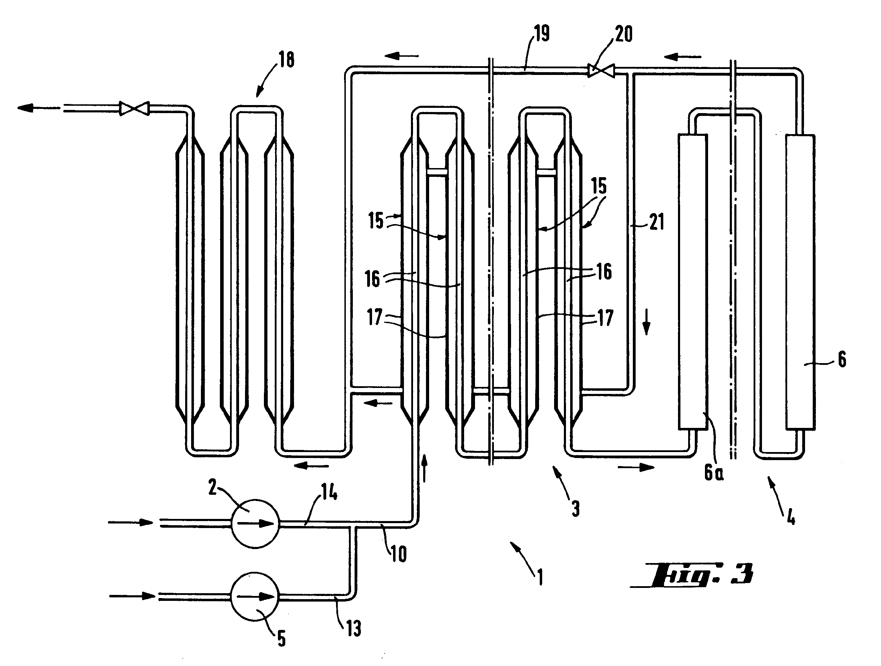

Die Vorrichtung 1 hat gemäss Fig. 3 eine Reihe von Aggregaten, die durch Rohrleitungen miteinander verbunden sind.

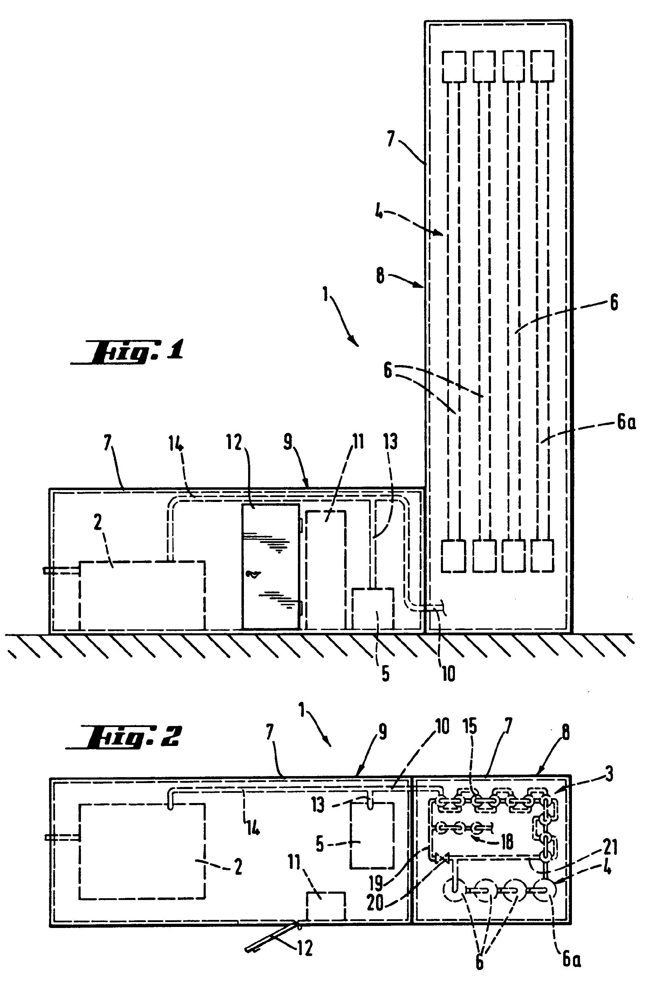

Im einzelnen sind sowohl in Fig. 1 und 2 als auch in Fig. 3 als derartige Aggregate eine Hochdruckpumpe 2 für das zu reinigende Medium, ein noch näher zu beschreibender, im ganzen mit 3 bezeichneter Wärmetauscher, in welchem ungereinigtes und erwärmtes gereinigtes Medium gegeneinandergeführt werden, ein im ganzen mit 4 bezeichneter Reaktor für die eigentliche Nassoxidation und ein Kompressor 5 zur Zufuhr eines Sauerstoff-Gas-Gemisches, zum Beispiel von Luft, zu dem Reaktor 4 vorgesehen.

Dabei erkennt man ferner, dass der Reaktor 4 in einzelne, nebeneinander angeordnete, hydraulisch in Reihe geschaltete Stücke 6 aufgeteilt ist und gemäss den Figuren 1 und 2 mit weiteren Aggregaten in einem Traggestell vormontiert ist, wobei die Abmessungen dieses Traggestelles und auch das Gesamtgewicht so gewählt sind, dass es auf einem Strassen- und/oder Schienenfahrzug transportierbar ist. Dabei hat dieses Traggestell Aussenwandungen 7, so dass insgesamt ein Gehäuse für die darin enthaltenen Aggregate gebildet wird, wodurch diese geschützt und abgeschirmt werden.

Im Ausführungsbeispiel ist vorgesehen, dass das aus Traggestell und Aussenwandungen gebildete Gehäuse ein Normcontainer 8 ist.

In Fig. 1 und 2 erkennt man ferner, dass zwei derartige Traggestelle bzw. Container 8 und 9 zur Aufnahme der einzelnen Aggregate 2 bis 5 vorgesehen und in Gebrauchsstellung die Verbindungsleitung 10 der Aggregate des einen Containers 8 mit denen des anderen Containers 9 kuppelbar ist. Die gesamte Vorrichtung 1 ist also im Ausführungsbeispiel in zwei Normcontainern 8 und 9 untergebracht, die jeweils vormontiert und bequem transportiert werden können, so dass am Austellungsort beide Container 8 und 9 nur noch in der in Fig. 1 erkennbaren L-Form aneinandergefügt und die Rohrleitung 10 verbunden werden muss, um die gesamte Vorrichtung 1 praktisch betriebsbereit zu machen.

Durch die Aufteilung des Reaktors 4 in mehrere-Stücke 6 kann dieser Reaktor 4 trotz der erforderlichen grossen Länge für eine ausreichende Verweilzeit innerhalb der Längenabmessung des Containers 8 untergebracht werden.

Der Container 9 enthält im Ausführungsbeispiel die Pumpe 2, den Kömpressor 5 und ausserdem einen Steuer- und Bedienungsschrank 11. Dies ist deshalb zweckmässig, weil es sich beim Container 9 um einen liegenden Container handelt, der durch eine Türe 12 bequem begangen werden kann, so dass der Steuerschrank 11 einfach erreichbar ist.

Der andere Container 8 enthält im Ausführungsbeispiel den in einzelne Stücke 6 aufgeteilten Reaktor 4 und den Wärmetauscher 3.

In allen drei Figuren erkennt man, dass im Ausführungsbeispiel die Druckleitung 13 des Kompressors 5 in die Druckleitung 14 der Hochdruckpumpe 2 mündet und zwar noch innerhalb des Containers 9. Dadurch ergibt sich für die weiterführende Leitung 10 nur eine einzige Kupplungsstelle am Uebergang vom Container 9 zum Container 8. Entsprechend schnell können beide Container 8 und 9 an ihrem Einsatzort zusammengeschaltet werden.

Im Ausführungsbeispiel nach Fig. 1 und 2 ist der Reaktor in vier rohrförmige Stücke 6 aufgeteilt, die hydraulisch hintereinander geschaltet und parallel zueinander angeordnet sind, so dass sie in dem aufrechtstehenden Container 8 bequem Platz finden. Es ergibt sich so die erforderliche Gesamtlänge des Reaktors 4, die insgesamt weit grösser als die Höhe dieses Containers 8 ist, ohne dessen Transportabmessungen zu überschreiten.

Dabei haben diese den Reaktor 4 bildenden Rohrstücke 6 jeweils einen übereinstimmenden Durchmesser und Querschnitt, was die Fertigung vereinfacht. Denkbar wäre allerdings auch, dass das in Strömungsrichtung erste rohrförmige Stück 6a des Reaktors 4 zur Verbesserung der Durchmischung des schon heissen Mediums mit dem zuströmenden Medium einen grösseren Querschnitt als die nachfolgenden Rohrstücke 6 hat.

Das Verhältnis der Länge zum Durchmesser der Rohrtücke 6 des Reaktors 4 ist gross und kann zum Beispiel zwischen zehn und fünfzig, insbesondere etwa vierzig betragen, das heisst, etwa 8 m lange Rohrstücke 6 können einen Durchmesser von ungefähr 20 cm haben. Solche acht Meter langen Rohrstücke lassen sich bequem in einem Container 8 von zum Beispiel 12 m grösster Länge bzw. Höhe unterbringen. Gleichzeitig ergibt sich dann unterhalb und oberhalb der Rohrstücke 6 genügend Platz für Anschlussleitungen, Uebergangsstücke und dergleichen.

Der Wärmetauscher 3 ist im Ausführungsbeispiel ebenfalls in einzelne, geometrisch nebeneinander angeordnete, hydraulisch hintereinander geschaltete Einrohr-Wärmetauscher 15 aufgeteilt, wobei das zuströmende Medium vorzugsweise durch das Innenrohr 16 und das gereinigte, heisse abströmende Medium durch den dieses umgebenden Mantel 17 im Gegenstrom strömen kann. Somit wird auch bei dem Wärmetauscher 3 das zur bestmöglichen Platzausnutzung auf der kleinsten Grundfläche des Containers 8 zweckmässige Prinzip angewendet und dennoch eine effektive Wärmeübertragung erreicht.

Die einzelnen Einrohr-Wärmetauscher 15 können jeweils eine Gesamtlänge haben, die etwa der der einzelnen Rohrstücke 6 des Reaktors 4 entspricht oder nur wenig darüber oder darunter liegen, so dass sie parallel zu diesen Reaktor-Rohrstücken 6 - wie in Fig. 2 angedeutet - in dem mit seiner Längsachse aufgerichtet stehenden Container 8 untergebracht werden können und dabei eine bestmögliche Platzausnutzung ergeben.

In Fig. 3 ist angedeutet, dass dem Wärmetauscher 3 für das Medium ein zweiter Wärmetauscher 18 nachgeschaltet ist, der zur Erwärmung zum Beispiel von Brauchwasser oder dergleichen dienen kann und die nach dem Wärmetauscher 3 noch vorhandene Restwärme ausnutzen kann. Aus Gründen der Rationalisierung und der preiswerten Fertigung könnte dabei auch dieser Rärmetauscher 18 aus Einrohr-Wärmetauschern bestehen, wie sie auch beim Wärmetauscher 3 Verwendung finden.

Um zu verhindern, dass das zu reinigende Medium in dem Wärmetauscher 3 eventuell eine zu hohe Temperatur erhält und dann im Reaktor 4 die Reaktionstemperatur überschritten wird, ist gemäss Fig. 3 vorgesehen, dass der Wärmetauscher 3 eine an ihm vorbeiführende Bypass-Leitung 19 aufweist, und dass im oder am Reaktor 4 ein nicht näher dargestellter Wärmefühler zur Ansteuerung oder Regelung eines Bypass-Ventiles 20 vorgesehen ist, mit welchem die Zuleitung 21 zu dem Wärmetauscher 3 teilweise geschlossen und umgekehrt die Bypass-Leitung 19 geöffnet werden kann, so dass ein Teil des von dem Reaktor 4 kommenden heissen, gereinigten Mediums zeitweilig an dem Wärmetauscher 3 vorbeigeführt werden kann und somit das zuströmende zu reinigende Medium mehr oder weniger erwärmt.

Um die Anlage anfahren zu können und dabei die erforderliche Reaktionstemperatur im Reaktor 4 zu erhalten, kann wenigstens das in Strömungsrichtung erste Reaktor-Rohrstück 6a, gegebenenfalls mehrere oder alle Reaktor-Rohrstücke 6 eine nicht näher dargestellte Heizung, vorzugsweise eine elektrische Heizung aufweisen. Diese kann eine unmittelbar an der Aussenfläche der Rohrstücke 6 oder 6a angeordnete Widerstandsheizung sein.

Damit bei Betriebsunterbrechungen die Betriebswärme möglichst lange erhalten bleibt und somit möglichst wenig Heizenergie für das Wiederanfahren benötigt wird, sind die Reaktor-Rohrstücke 6 und 6a gegebenenfalls auch der Wärmetauscher 3 aussenseitig isoliert. Dies kann durch Einzelisolation der einzelnen Aggregate und ihrer Teile sowie auch der Rohrleitungen erfolgen oder es kann der die Reaktor-Rohrstücke 6 und 6a und den Wärmetauscher 3 enthaltende Container 8 mit Isoliermaterial, zum Beispiel Steinwolle oder dergleichen, gefüllt sein.

Die Vorrichtung 1 zur Nassoxidation ist mit ihren einzelnen Aggregaten, nämlich einer Hochdruckpumpe 2, einem Wärmetauscher 3, einem Reaktor 4 für die eigentliche Nassoxidation und einem Kompressor 5 zur Zufuhr eines Sauerstoff-Gas-Gemisches in einem oder zwei Traggestellen vormontiert und derart untergebracht, dass deren Abmessungen und deren Gesamtgewicht einen Transport auf einem Strassen- und/oder Schienenfahrzug ermöglicht, wobei zweckmässigerweise zwei derartige Traggestelle als Normcontainer 8 und 9 vorgesehen sind, deren einer den in einzelne Rohrstücke 6 aufgeteilten Reaktor 4 und den Wärmetauscher 3 und deren anderer die übrigen Aggregate enthalten kann, so dass eine Vorfertigung der gesamten Vorrichtung in nahezu betriebsbereitem Zustand möglich ist und am Einsatzort nur die beiden Container aufgestellt, zusammengeschlossen und angeschlossen werden müssen. Somit wird eine Nassoxidation auch bei geringeren Mengen von zu reinigendem Medium durchführbar.

## Patentansprüche

1. Vorrichtung (1) zur Nassoxidation von insbesondere organisch verunreinigten Flüssigkeiten und/oder Schlämmen mit durch Leitungen untereinander verbundenen Aggregaten, nämlich mit mindestens einer Hochdruckpumpe (2) für das zu reinigende Medium, mit wenigstens einem Wärmetauscher (3), in welchem ungereinigtes und erwärmtes gereinigtes Medium gegeneinandergeführt werden, mit wenigstens einem weiteren Wärmetauscher (18), in dem das gereinigte Medium auf unter 100°C gekühlt wird, mit einem Reaktor (4) für die eigentliche Nassoxidation und mit einem Kompressor (5) zur Zufuhr eines Sauerstoff-Gas-Gemisches, vorzugsweise von Luft, zu dem Reaktor 4, dadurch gekennzeichnet, dass der Reaktor (4) in einzelne, nebeneinander angeordnete, hydraulisch in Reihe geschaltete Stücke (6, 6a) aufgeteilt ist und mit weiteren Aggregaten (2 - 5) in wenigstens zwei Traggestellen (8, 9), vormontiert ist, wobei die
Verbindungsleitungen (10) der Aggregate des einen Traggestells (8) mit denen des anderen Traggestells (9) kuppelbar sind, und wobei die Abmessungen der Traggestelle (8, 9) und das Gesamtgewicht der Vorrichtung so gewählt sind, dass sie auf einem Strassen- und/oder Schienenfahrzeug tansportierbar sind, dass wenigstens das in Strömungsrichtung erste Reaktor-Rohrstück (6a) eine Heizung aufweist, und dass die Druckleitung (13) des Sauerstoff-Gas-Gemisches vor dem Eintritt in den Wärmetauscher ₍₃₎ ᵢₙ die Druckleitung (14) für das zu reinigende Medium mündet.

2. Vorrichtung nach Anspruch 1, dadurch gekennzeichnet, dass jedes Traggestell Aussenwandungen (7) hat und ein Gehäuse für die darin enthaltenen Aggregate bildet.

3. Vorrichtung nach Anspruch 2, dadurch gekennzeichnet, dass jedes aus Traggestell und Aussenwandungen gebildete Gehäuse ein Normcontainer (8) ist.

4. Vorrichtung nach Anspruch 3, dadurch gekennzeichnet, dass der eine Normcontainer (9) die Pumpe (2) und den Kompressor (5) sowie gegebenenfalls einen Steuer- und Bedienungsschrank (11) und der andere den in einzelne Stücke (6) aufgeteilten Reaktor (4) und vorzugsweise den Wärmetauscher (3) enthalten.

5. Vorrichtung nach einem der Ansprüche 1 bis 4, dadurch gekennzeichnet, dass die Druckleitung (13) des Kompressors (5) in die Druckleitung (14) der Hochdruckpumpe (2) mündet.

6. Vorrichtung nach einem der Ansprüche 1 bis 5, dadurch gekennzeichnet, dass der Reaktor (4) in wenigstens drei oder vier vorzugsweise rohrförmige Stücke (6) aufgeteilt ist, die hydraulisch hintereinander geschaltet und etwa parallel zueinander angeordnet sind.

7. Vorrichtung nach Anspruch 6, dadurch gekennzeichnet, dass die den Reaktor (4) bildenden rohrförmigen Stücke (6) jeweils einen übereinstimmenden Durchmesser und/oder Querschnitt haben.

8. Vorrichtung nach Anspruch 6 oder 7, dadurch gekennzeichnet, dass das in Strömungsrichtung erste Rohrstück (6a) des Reaktors zur Verbesserung der Durchmischung des schon heissen Mediums mit dem zuströmenden Medium einen grösseren Querschnitt als seine nachfolgenden Rohrstücke (6) hat.

9. Vorrichtung nach einem der Ansprüche 6 bis 8, daduch gekennzeichnet, dass das Verhältnis der Länge zum Durchmesser der Rohrstücke (6) des Reaktors (4) gross ist und beispielsweise zwischen zehn und fünfzig, insbesondere etwa bei zwanzig bis vierzig liegt, wobei zum Beispiel etwa 8 m lange Rohrstücke (6) einen Durchmesser von ungefähr 20 cm haben.

10. Vorrichtung nach einem der Ansprüche 1 bis 9, dadurch gekennzeichnet, das der Wärmetauscher (3) durch geometrisch nebeneinander angeordnete, hydraulisch hintereinander geschaltete Einrohr-Wärmetauscher (15) gebildet ist, wobei das zuströmende Medium vorzugsweise durch das Innenrohr (16) und das gereinigte, heisse abströmende Medium durch den dieses umgebenden Mantel (17) strömen.

11. Vorrichtung nach Anspruch 10, dadurch gekennzeichnet, dass die einzelnen Einrohr-Wärmetauscher (15) jeweils eine Gesamtlänge haben, die etwa der der einzelnen Rohrstücke (6) des Reaktors (4) entspricht oder nur wenig darüber oder darunter liegt.

12. Vorrichtung nach einem der Ansprüche 1 bis 11, dadurch gekennzeichnet, dass dem Wärmetauscher (3) für das Medium ein zweiter Wärmetauscher (18) nachgeschaltet ist, der zur Erwärmung zum Beispiel von Brauchwasser oder dergleichen dient.

13. Vorrichtung nach einem der Ansprüche 1 bis 12, dadurch gekennzeichnet, dass der Wärmetauscher (3) zum Vorwärmen des zu reinigenden Mediums eine ventilgesteuerte, an ihm vorbeiführende Bypassleitung (19) aufweist und dass im oder am Reaktor (4) wenigstens ein Wärmefühler zur Steuerung oder Regelung des Bypass-Ventiles (20) vorgesehen ist.

14. Vorrichtung nach einem der Ansprüche 1 bis 13, dadurch gekennzeichnet, dass mehrere oder alle Reaktor-Rohrstücke (6) eine Heizung, vorzugsweise eine elektrische Heizung, aufweisen.

15. Vorrichtung nach einem der Ansprüche 1 bis 16, dadurch gekennzeichnet, dass für das/die Reaktor-Rohrstücke eine unmittelbar an deren Aussenfläche angeordnete Widerstandsheizung vorgesehen ist.

16. Vorrichtung nach einem der Ansprüche 1 bis 17, dadurch gekennzeichnet, dass die Reaktor-Rohrstücke (6) und/oder die Wärmetauscher (3) aussenseitig isoliert sind.

## Claims

1. An apparatus (1) for the wet oxidation especially of organically contaminated liquids and/or slurries, which has units which are connected to one another by means of pipes, namely at least one high-pressure pump (2) for the medium to be purified, at least one heat exchanger (3) in which unpurified medium and heated purified medium are conveyed in opposite directions, at least one further heat exchanger (18) in which the purified medium is cooled to below 100°C, a reactor (4) for the actual wet oxidation, and a compressor (5) for feeding an oxygen/gas mixture, preferably air, to the reactor (4), wherein the reactor (4) is divided into individual sections (6, 6a), which are arranged next to one another and are connected hydraulically in series, and is pre-assembled with further units (2-5) in at least two supporting frames (8, 9), it being possible for the connecting lines (10) of the units of one supporting frame (8) to be coupled to those of the other supporting frame (9), and the dimensions of the supporting frames (8, 9) and the overall weight of the apparatus being so selected that they can be transported on a road and/or rail vehicle, wherein at least the reactor tube section (6a) that is located first in the direction of flow has a heating means, and wherein the pressure line (13) for the oxygen/gas mixture opens into the pressure line (14) for the medium to be purified before entering the heat exchanger (3).

2. An apparatus according to claim 1 wherein each supporting frame has outer walls (7) and forms a housing for the units contained therein.

3. An apparatus according to claim 2 wherein each housing formed by the supporting frame and the outer walls is a standard container (8).

4. An apparatus according to claim 3 wherein one standard container (9) contains the pump (2) and the compressor (5) and, optionally, a control and operating console (11), and the other contains the reactor (4), divided into individual sections (6), and preferably the heat exchanger (3).

5. An apparatus according to any one of claims 1 to 4 wherein the pressure line (13) of the compressor (5) opens into the pressure line (14) of the high-pressure pump (2).

6. An apparatus according to any one of claims 1 to 5 wherein the reactor (4) is divided into at least three or four preferably tubular sections (6) which are connected hydraulically in series and are arranged approximately parallel to one another.

7. An apparatus according to claim 6 wherein the tubular sections (6) forming the reactor (4) have identical diameters and/or cross-sections.

8. An apparatus according to either claim 6 or claim 7 wherein, in order to improve the mixing of the already hot medium with the incoming medium, the tube section (6a) of the reactor that is located first in the direction of flow has a larger cross-section than the subsequent tube sections (6).

9. An apparatus according to any one of claims 6 to 8 wherein the ratio of the length of the tube sections (6) of the reactor (4) to their diameter is large and is, for example, from ten to fifty, especially approximately from twenty to forty, whereby tube sections (6) approximately 8 m in length, for example, have a diameter of approximately 20 cm.

10. An apparatus according to any one of claims 1 to 9 wherein the heat exchanger (3) is formed by single-tube heat exchangers (15) which are arranged geometrically next to one another and are connected hydraulically in series, the incoming medium preferably flowing through the inner tube (16) and the purified, hot outgoing medium preferably flowing through the jacket (17) surrounding the inner tube.

11. An apparatus according to claim 10 wherein each of the individual single-tube heat exchangers (15) has an overall length that corresponds approximately to the length of the individual tube sections (6) of the reactor (4) or that is only slightly greater or slightly less than that length.

12. An apparatus according to any one of claims 1 to 11 wherein downstream of the heat exchanger (3) for the medium there is arranged a second heat exchanger (18) which serves to heat, for example, industrial water or the like.

13. An apparatus according to any one of claims 1 to 12 wherein the heat exchanger (3) for preheating the medium to be purified has a valve-controlled bypass line (19) that bypasses the heat exchanger, and there is provided in or on the reactor (4) at least one heat sensor for actuating or regulating the bypass valve (20).

14. An apparatus according to any one of claims 1 to 13 wherein some or all of the reactor tube sections (6) have a heating means, preferably an electric heating means.

15. An apparatus according to any one of claims 1 to 16 wherein there is provided for the reactor tube section(s) a resistance heating means arranged directly on its/their outer surface.

16. An apparatus according to any one of claims 1 to 17 wherein the reactor tube sections (6) and/or the heat exchangers (3) are insulated on the outside.

## Revendications

1. Dispositif (1) pour l'oxydation par voie humide de liquides et/ou de boues souillées notamment par des matières organiques, ce dispositif comportant des appareils mutuellement reliés par des conduits, à savoir au moins une pompe (2) haute pression pour acheminer le milieu à purifier, au moins un échangeur (3) de chaleur dans lequel on fait circuler à contre-courant le milieu souillé et le milieu chauffé et purifié, au moins un autre échangeur (18) de chaleur dans lequel le milieu purifié est soumis à refroidissement jusqu'à une température inférieure à 100 °C, un réacteur (4) pour effectuer l'oxydation proprement dite par voie humide et un compresseur (5) pour acheminer un mélange d'oxygène et de gaz, avantageusement de l'air, au réacteur (4), dispositif caractérisé en ce que le réacteur (4) est subdivisé en des éléments (6, 6a) individuels, disposés côte à côte et reliés hydrauliquement en série, et en ce qu'il est prémonté avec d'autres appareils (2-5) dans au moins deux bâtis (8, 9) de support, les conduits (10) de liaison des appareils du premier bâti (8) de support pouvant être reliés ou accouplés aux conduits de l'autre bâti (9) de support, et les dimensions des bâtis (8, 9) de support et le poids total du dispositif étant choisis de façon à en permettre le transport dans un véhicule routier et/ou ferroviaire; en ce qu'au moins le premier (dans le sens de l'écoulement) élément tubulaire (6) du réacteur présente un chauffage ; et en ce que le conduit (13) acheminant sous pression le mélange d'oxygène et de gaz débouche, avant l'entrée dans l'échangeur (3) de chaleur, dans le conduit (14) acheminant sous pression le milieu à purifier.

2. Dispositif selon la revendication 1, caractérisé en ce que chaque bâti de support comporte des parois (7) extérieures et forme un logement abritant les appareils qui y sont contenus.

3. Dispositif selon la revendication 2, caractérisé en ce que chaque logement, formé par un bâti de support et des parois extérieures, est un conteneur normalisé (8).

4. Dispositif selon la revendication 3, caractérisé en ce qu'un conteneur normalisé (9) contient la pompe (2) et le compresseur (5) ainsi qu'éventuellement une armoire (11) de commande et de service, et l'autre conteneur contient le réacteur (4), subdivisé en des éléments (6) individuels et avantageusement l'échangeur (3) de chaleur.

5. Dispositif selon l'une des revendications 1 à 4, caractérisé en ce que le conduit (13) sous pression de refoulement du compresseur (5) débouche dans le conduit (14) sous pression de refoulement de la pompe (2) haute pression.

6. Dispositif selon l'une des revendications 1 à 5, caractérisé en ce sue le réacteur (4) est subdivisé en au moins trois ou quatre éléments (6), avantageusement tubulaires, qui sont reliés hydrauliquement en série et qui sont disposés à peu près parallèlement les uns aux autres.

7. Dispositif selon la revendication 6, caractérisé en ce que les éléments (6) tubulaires formant le réacteur (4) ont un diamètre et/ou une section correspondant(e).

8. Dispositif selon la revendication 6 ou 7, caractérisé en ce que le premier (dans le sens de l'écoulement) élément tubulaire (6a) du réacteur présente, pour améliorer le mélangeage du milieu déjà chaud avec le milieu qui arrive, une plus grande section que les éléments tubulaires (6) suivants.

9. Dispositif selon l'une des revendications 6 à 8, caractérisé en ce que le rapport entre la longueur et le diamètre des éléments tubulaires (6) du réacteur (4) est grand et il se situe par exemple entre 10 et 50, notamment entre environ 20 et 40, de sorte, par exemple, que des éléments tubulaires (6) d'une longueur d'environ 8 m ont un diamètre d'environ 20 cm.

10. Dispositif selon l'une des revendications 1 à 9, caractérisé en ce que l'échangeur (3) de chaleur est formé par des échangeurs monotubulaires (15) de chaleur disposés géométriquement l'un à côté de l'autre et reliés hydrauliquement en série, le milieu qui arrive s'écoulant avantageusement dans le tube intérieur (16) et le milieu purifié, chaud et qui va partir parcourant l'enveloppe (17) qui entoure le tube intérieur.

11. Dispositif selon la revendication 10, caractérisé en ce que les divers échangeurs monotubulaires (15) de chaleur ont chacun une longueur totale qui correspond approximativement à celle des divers éléments tubulaires (6) du réacteur (4) ou qui se situe seulement à un peu plus ou un peu moins que cette longueur.

12. Dispositif selon l'une des revendications 1 à 11, caractérisé en ce que l'échangeur (3) de chaleur pour le milieu est suivi d'un second échangeur (18) de chaleur qui sert à réchauffer par exemple de l'eau industrielle ou un fluide analogue.

13. Dispositif selon l'une des revendications 1 à 12, caractérisé en ce que l'échangeur (3) de chaleur destiné à préchauffer le milieu à purifier présente un conduit (19) de bipasse, commandé par vanne et qui le contourne, et en ce qu'on prévoit, sur ce conduit ou sur le réacteur (4), au moins un détecteur de chaleur pour commander ou réguler la vanne (20) de bipasse.

14. Dispositif selon l'une des revendications 1 à 13, caractérisé en ce que plusieurs des éléments tubulaires (6) du réacteur, ou la totalité de ces éléments tubulaires (6), présentent un chauffage, avantageusement un chauffage électrique.

15. Dispositif selon l'une des revendications 1 à 16, caractérisé en ce que l'on prévoit pour le ou les éléments tubulaires du réacteur un chauffage par résistance placé directement sur sa ou sur leur surface extérieure.

16. Dispositif selon l'une des revendications 1 à 17, caractérisé en ce que les éléments tubulaires (6) du réacteur et/ou l'échangeur (3) de chaleur est ou sont extérieurement calorifugés.
